# EUROPÄISCHE PATENTSCHRIFT

(11) **EP 2 173 517 B1**
(45) Veröffentlichungstag und Bekanntmachung des Hinweises auf die Patenterteilung: **05.12.2012**
(21) Anmeldenummer: 08761003.6
(22) Anmeldetag: 13.06.2008
(51) Int. Cl.: B23P 15/10, B23P 23/04, F02F 3/00

(54) **VERFAHREN ZUM BEARBEITEN UND FÜGEN EINES KOLBENS**
METHOD FOR MACHINING AND ASSEMBLING A PISTON
PROCÉDÉ DE TRAITEMENT ET D'ASSEMBLAGE D'UN PISTON

(30) Priorität: 02.08.2007 DE 102007036234
(43) Veröffentlichungstag der Anmeldung: 14.04.2010
(73) Patentinhaber: Mahle International GmbH, 70376 Stuttgart (DE)
(72) Erfinder: FEDYNA, Achim, 73441 Aufhausen (DE); SCHNAITMANN, Gottfried, 71522 Backnang (DE)
(74) Vertreter: Jooß, Martin
(86) Internationale Anmeldenummer: PCT/EP2008/057478
(87) Internationale Veröffentlichungsnummer: WO 2009/015938

(56) Entgegenhaltungen:
- EP-A- 0 992 670
- WO-A-01/53033
- DE-A1- 10 002 053
- US-A- 5 157 824

## Beschreibung

Die vorliegende Erfindung betrifft ein Verfahren zum Bearbeiten und Fügen eines aus einem Kolbenoberteil und einem Kolbenunterteil bestehenden Kolbens einer Brennkraftmaschine gemäß dem Oberbegriff des Anspruchs 1. Ein solches Verfahren ist aus der EP 0 992 670 A2 bekannt.

In thermisch und mechanisch hoch belasteten Brennkraftmaschinen werden üblicherweise Kolben mit einer integrierten Kühlkanalstruktur eingesetzt, durch die während des Motorenbetriebs Kühlmedium, insbesondere Motorenöl zur Kolbenkühlung geleitet wird. Eine Möglichkeit zur Herstellung derartiger Kolben ist es, diese zweigeteilt auszuführen und anschließend zu fügen. Ein wichtiger Aspekt beim Fügen der beiden Kolbenhälften ist dabei das Positionieren und Ausrichten derselben vor dem eigentlichen Fügeprozess. Je genauer ausgerichtet werden kann, desto geringer sind notwendige Fertigungsaufmaße für eine Nachbearbeitung nach dem Fügeprozess, was einen hohen Einfluss auf die Wirtschaftlichkeit des Prozesses hat.

Ausführungen gebauter Kolben sowie deren Herstellprozess sind beispielsweise aus der DE 41 34 529 C2, aus der DE 41 34 530 C2, aus der DE 100 42 422 C1, aus der DE 100 47 258 C2, aus der DE 101 32 447 A1, aus der DE 101 52 316 A1, aus der DE 102 09 168 B4, sowie aus der DE 10 2004 038 464 A1 bekannt.

Aus der US-A-51157824 ist eine Vorrichtung zum Bearbeiten und Fügen zweier Werkstücke bekannt. Die Vorrichtung weist zwei koaxial zueinander angeordnete und unabhängig voneinander antreibbare Arbeitsspindeln auf, wovon jeweils eine ein zugehöriges Werkstück trägt.

Aus der WO 01/53033 A1 ist ebenfalls eine Vorrichtung zum Bearbeiten und Fügen zweier Werkstücke bekannt.

Aus der EP 0 992 670 A2 eine Vorrichtung zum Herstellen von zusammengesetzten Kolben bekannt.

Die vorliegende Erfindung beschäftigt sich mit dem Problem, ein Verfahren anzugeben, mit welchem eine Bearbeitung und ein Fügen eines gebauten Kolbens kostengünstig realisiert werden kann.

Dieses Problem wird erfindungsgemäß durch den Gegenstand des unabhängigen Anspruchs 1 gelöst. Vorteilhafte Ausführungsformen sind Gegenstand der Unteransprüche.

Die Erfindung beruht auf dem allgemeinen Gedanken, ein Verfahren zum Bearbeiten und Fügen eines aus einem Kolbenoberteil und einem Kolbenunterteil bestehenden Kolbens einer Brennkraftmaschine mittels einer Vorrichtung anzugeben, bei dem die beiden Kolbenteile unabhängig voneinander auf zwei koaxial zueinander angeordneten Arbeitsspindeln eingespannt sind und bearbeitet werden. Zusätzlich werden die beiden Kolbenteile auf den beiden Arbeitsspindeln zueinander ausgerichtet, wobei eine Fügestelle zwischen dem Kolbenoberteil und dem Kolbenunterteil gereinigt werden kann und anschließend, die beiden Kolbenteile miteinander gefügt werden, ohne zwischenzeitlich ausgespannt werden zu müssen.

Gemäß einer bevorzugten Ausführungsform können dabei die beiden Kolbenteile miteinander verschraubt, verklebt, verlötet, verschweißt und/oder thermisch gefügt werden.

Auch vorstellbar ist, dass zum thermischen Fügen des Kolbenoberteils mit dem Kolbenunterteil das Kolbenoberteil und/oder das Kolbenunterteil mit einem Laser oder einer Induktionsheizung erhitzt werden.

Die Erfindung beruht weiter auf dem allgemeinen Gedanken eine Vorrichtung zum Bearbeiten und Fügen eines aus einem Kolbenoberteil und einem Kolbenunterteil bestehenden Kolbens zu verwenden, welche zwei koaxial zueinander angeordnete Arbeitsspindeln aufweist, an denen ein Kolbenunterteil und ein zugehöriges Kolbenoberteil unabhängig voneinander bearbeitet und nach dem Bearbeitungsvorgang zueinander ausgerichtet und miteinander gefügt werden können. Eine der Arbeitsspindeln trägt dabei das Kolbenoberteil, während die andere Arbeitsspindel das Kolbenunterteil trägt. Darüber hinaus weist die erfindungsgemäße Vorrichtung zwei unabhängig voneinander betätigbare Werkzeugschlitten auf, wovon der eine Werkzeugschlitten Werkzeug zur Bearbeitung des Kolbenoberteils und der andere Werkzeugschlitten Werkzeug zur Bearbeitung des Kolbenunterteils trägt. Über die beiden Werkzeugschlitten kann somit eine Bearbeitung des Kolbenoberteils beziehungsweise des Kolbenunterteils unabhängig voneinander erfolgen, wobei auch denkbar ist, dass der eine und/oder der andere Werkzeugschlitten soweit verfahrbar ist, dass er beide Kolbenteile bearbeiten kann. Durch die erfindungsgemäße Vorrichtung ist es möglich, die beiden Kolbenteile nach dem Bearbeitungsprozess über die Spindelachsen zueinander zu positionieren beziehungsweise auszurichten, wodurch Positionierfehler der beiden Kolbenteile zueinander auf ein Minimum reduziert werden können, da diese allein auf die Fertigungs- und Achsungenauigkeiten der Vorrichtung zurückzuführen sind. Von besonderem Vorteil ist dabei, dass die erfindungsgemäße Vorrichtung nicht nur zum Bearbeiten sondern auch zum gleichzeitigen Fügen der beiden Kolbenteile ausgebildet ist und daher ein Ausspannen der beiden Kolbenteile nach dem Bearbeiten mit einem anschließenden Einspannen in ein weiteres Werkzeug unterbleiben kann. Insgesamt trägt somit die Vorrichtung dazu bei, den Herstellprozess derartig gebauter Kolben zu optimieren und insbesondere eine Ausrichtgenauigkeit der beiden Kolbenteile zueinander deutlich zu erhöhen.

Zweckmäßig weist die Vorrichtung eine Fügeeinrichtung auf, welche zum Fügen der beiden Kolbenteile, insbesondere zum Verschrauben, Verkleben, Verlöten, Verschweißen und/oder zum thermischen Fügen ausgebildet ist. Eine derartige Fügeeinrichtung kann beispielsweise einen Laser oder eine Induktionsheizung aufweisen. Durch die Integration des Fügeprozesses in den Bearbeitungsprozess des Kolbens lässt sich der Herstellprozess des Kolbens insgesamt rationalisieren und deutlich weniger aufwändig gestalten, da durch die mit der erfindungsgemäßen Vorrichtung erhöhte Ausrichtgenauigkeit eine deutlich geringere, wenn nicht gar keine Nachbearbeitung der Kolbenteile erforderlich ist.

Bei einer weiteren vorteilhaften Ausführungsform der erfindungsgemäßen Lösung weist die Vorrichtung eine Reinigungseinrichtung auf, welche zur Reinigung einer Fügestelle vor dem Fügevorgang der beiden Kolbenteile ausgebildet ist. Eine derartige Reinigungsvorrichtung kann beispielsweise in der Art eines Gebläses mit einer Strahldüse ausgebildet sein, welche die Fügestelle vor dem Fügen der beiden Kolbenteile beispielsweise mittels Druckluft säubert. Hierdurch kann eine besonders hochwertige Fügung der beiden Kolbenteile erreicht werden.

Bei einer weiteren vorteilhaften Ausführungsform der erfindungsgemäßen Lösung ist zumindest eine Arbeitsspindel zum Verschrauben der beiden Kolbenteile mit einem vordefinierten Drehmoment beaufschlagbar war. Dies bietet den großen Vorteil, dass der Fügeprozess qualitätsüberwacht werden kann, da die beiden Kolbenteile stets mit einem genau vordefinierten und kontrollierbaren Drehmoment miteinander verschraubt werden, wobei das eingestellte Drehmoment ein für die Dichtwirkung der beiden Kolbenteile optimales Drehmoment darstellt. Dies ist insbesondere dann wichtig, wenn zwischen den beiden Kolbenteilen ein Kühlkanal ausgebildet ist, welcher im Bereich der Fügestellen zwischen dem Kolbenoberteil und dem Kolbenunterteil abgedichtet sein muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine erfindungsgemäße Vorrichtung zum Bearbeiten und Fügen eines Kolbens,
- Fig. 2: ein stark schematisierter Verfahrensablauf des erfindungsgemäßen Verfahrens zum Bearbeiten und Fügen des Kolbens.

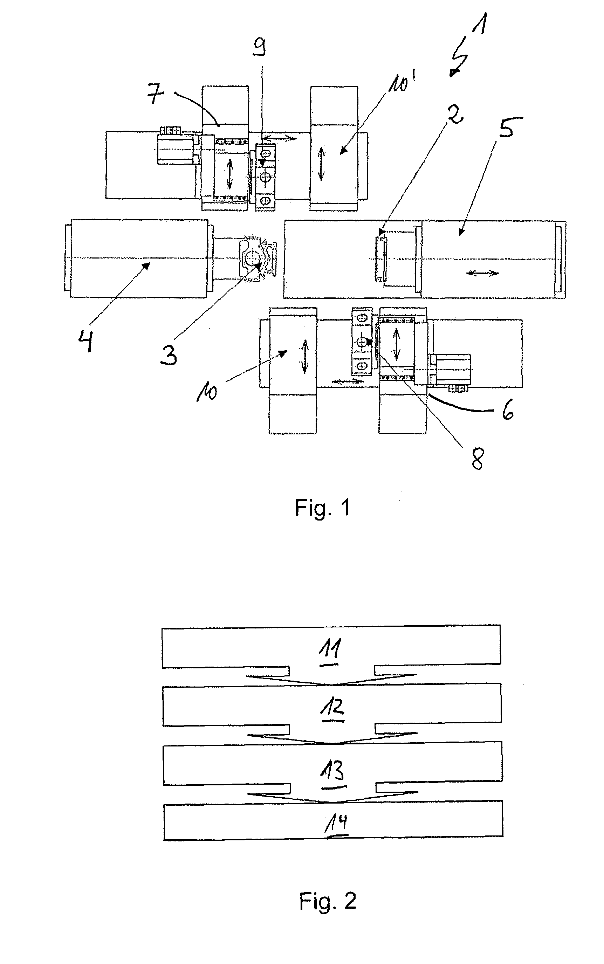

Entsprechend Fig. 1 weist eine erfindungsgemäße Vorrichtung 1 zum Bearbeiten und Fügen eines aus einem Kolbenoberteil 2 und einem Kolbenunterteil 3 bestehenden Kolbens einer Brennkraftmaschine zwei koaxial zueinander angeordnete und unabhängig voneinander antreibbare Arbeitsspindeln 4 und 5 auf. Dabei trägt die Arbeitsspindel 4 das Kolbenunterteil 3, während die Arbeitsspindel 5 das Kolbenunterteil 2 trägt. Des weiteren weist die erfindungsgemäße Vorrichtung 1 zwei unabhängig voneinander betätigbare Werkzeugschlitten 6 und 7 auf, wovon der eine Werkzeugschlitten 6 ein Werkzeug 8 zur Bearbeitung des Kolbenoberteils 2 und der andere Werkzeugschlitten 7 ein Werkzeug 9 zur Bearbeitung des Kolbenunterteils 3 trägt. Generell ist dabei die Vorrichtung 1 so ausgebildet, dass die beiden Kolbenteile 2 und 3 unabhängig voneinander bearbeitet, zueinander ausgerichtet und miteinander gefügt werden können, ohne dass diese zwischenzeitlich von der Arbeitsspindel 4, 5 abgebaut werden müssten.

Darüber hinaus kann die Vorrichtung 1 eine Fügeeinrichtung 10 beziehungsweise 10' aufweisen, welche zum Fügen der beiden Kolbenteile 2 und 3, insbesondere zum Verschrauben, Verkleben, Verlöten, Verschweißen und/oder zum thermischen Fügen ausgebildet ist. Zum thermischen Fügen kann die Fügeeinrichtung 10, 10' beispielsweise einen Laser oder eine Induktionsheizung aufweisen.

Ein Verschrauben der beiden Kolbenteile 2 und 3, insbesondere ein thermisches Verschrauben der beiden Kolbenteile 2 und 3 kann durch ein Verdrehen zumindest einer der beiden Arbeitsspindeln 4, 5 bei gleichzeitigem Vortrieb derselben in Richtung auf das andere Kolbenteil 3, 2 erfolgen. Dabei kann die Vorrichtung 1 so ausgebildet sein, dass zumindest eine Arbeitsspindel 4, 5 zum Verschrauben der beiden Kolbenteile 2, 3 mit einem vordefinierten Drehmoment beaufschlagbar ist, so dass die beiden Kolbenteile 2, 3 mit einem exakt definierten Anzugsmoment miteinander verschraubt werden können.

Optional kann die Vorrichtung 1 auch eine nicht gezeigte Reinigungseinrichtung aufweisen, welche zur Reinigung einer Fügestelle der beiden Kolbenteile 2, 3 vor dem Fügevorgang ausgebildet ist. Eine derartige Reinigungseinrichtung kann beispielsweise in der Art einer druckluftbeaufschlagten Düse ausgebildet sein, welche die Fügestellen vor dem Fügen der beiden Kolbenteile 2, 3 abstrahlt und damit säubert.

Gemäß der Fig. 1 kann dabei zumindest die Arbeitsspindel 5 in Axialrichtung auf die Arbeitsspindel 4 zu bzw. von dieser weg verfahren erden, wobei die Werkzeugschlitten 6, 7 mit den dazugehörigen Werkzeugen 8, 9 sowie die Fügeeinrichtung 10, 10' ebenfalls derart verfahrbar gelagert sind, dass ein problemloses Bearbeiten beziehungsweise Fügen der beiden Kolbenteile 2, 3 möglich ist.

Gemäß Fig. 2 ist ein möglicher Verfahrensablauf zum Bearbeiten und Fügen des aus einem Kolbenoberteil 2 und dem Kolbenunterteil 3 bestehenden Kolbens mit unterschiedlichen Verfahrensschritten dargestellt. Dabei werden zunächst in einem Verfahrensschritt 11 die beiden Kolbenteile 2, 3 unabhängig voneinander auf den beiden koaxial zueinander angeordneten Arbeitsspindeln 4, 5 eingespannt und bearbeitet, insbesondere vorbearbeitet. Im nachfolgenden Arbeitsschritt 12 werden die beiden Kolbenteile 2, 3 auf den beiden Arbeitsspindeln 4, 5 zueinander ausgerichtet beziehungsweise relativ zueinander positioniert. Vor dem eigentlichen Fügevorgang wird dann die Fügestelle zwischen dem Kolbenoberteil 2 und dem Kolbenunterteil 3 optional im Verfahrensschritt 13 gereinigt. Im Verfahrensschritt 14 werden schließlich die beiden Kolbenteile 2, 3 miteinander gefügt, das heißt insbesondere' miteinander verschraubt, verklebt und/oder verlötet, wobei zwischen dem Verfahrensschritt 11 und dem Verfahrensschritt 14 die beiden Kolbenteile 2, 3 auf den zugehörigen Arbeitsspindeln 4, 5 verbleiben können.

Hierdurch wird erreicht, dass nach einem Zerspanprozess die beiden Kolbenteile 2, 3 über die Maschinenachsen zueinander positioniert und ausgerichtet werden können und dadurch Positionierfehler der beiden Kolbenteile 2, 3 zueinander auf ein Minimum reduziert werden können, da ein möglicher Positionierfehler nunmehr allein auf die Fertigungs- und Achsungenauigkeiten der Vorrichtung 1 zurückzuführen ist.

Darüber hinaus bietet die erfindungsgemäße Vorrichtung 1 den großen Vorteil, nicht nur die Vor- beziehungsweise Hauptbearbeitung der beiden Kolbenteile 2, 3 vornehmen zu können, sondern diese in einem anschließenden Verfahrensschritt 14 ohne weiteres Handling miteinander Fügen zu können. Hierdurch wird eine Rationalisierung des Herstellprozesses des Kolbens erreicht, wodurch sich Kosten einsparen lassen. Das Fügen kann dabei unter Zuhilfenahme eines thermischen Fügeverfahrens durchgeführt werden, wobei beispielsweise das Kolbenoberteil 2 stark erwärmt wird und/oder das Kolbenunterteil 3 stark abgekühlt wird. Anschließend können die beiden Kolbenteile 2 und 3 problemlos miteinander verschraubt werden, wobei sich beim anschließenden Abkühlen des Kolbenoberteils 2 beziehungsweise dem anschließenden Aufwärmen des Kolbenunterteils 3 ein zuverlässiger Schrumpfsitz zwischen den beiden Kolbenteilen 2 und 3 ergibt.

## Patentansprüche

1. Verfahren zum Bearbeiten und Fügen eines aus einem Kolbenoberteil (2) und einem Kolbenunterteil (3) bestehenden Kolbens einer Brennkraftmaschine mit einer Vorrichtung (1), mit zwei koaxial zueinander angeordneten und unabhängig voneinander antreibbaren Arbeitsspindeln (4, 5), wovon die eine das Kolbenoberteil (2) und die andere das Kolbenunterteil (3) trägt,
**dadurch gekennzeichnet,**
- **dass** die Vorrichtung (1) zwei unabhängig voneinander betätigbare Werkzeugschlitten (6, 7) aufweist, wovon der eine Werkzeugschlitten (6) Werkzeug (8) zur Bearbeitung des Kolbenoberteils (2) und der andere Werkzeugschlitten (7) Werkzeug (9) zur Bearbeitung des Kolbenunterteils (3) trägt,
wobei
- die beiden Kolbenteile (2, 3) unabhängig voneinander auf zwei koaxial zueinander angeordneten Arbeitsspindeln (4, 5) eingespannt sind und bearbeitet werden,
- die beiden Kolbenteile (2, 3) auf den beiden Arbeitsspindeln (4, 5) zueinander ausgerichtet werden,
- eine Fügestelle zwischen dem Kolbenoberteil (2) und dem Kolbenunterteil (3) gereinigt werden kann,
- die beiden Kolbenteile (2, 3) miteinander gefügt werden, ohne zwischenzeitlich ausgespannt werden zu müssen.

2. Verfahren nach Anspruch 1,
**dadurch gekennzeichnet,**
**dass** die beiden Kolbenteile (2, 3) miteinander verschraubt, verklebt, verlötet, verschweißt und/oder thermisch gefügt werden.

3. Verfahren nach Anspruch 1 oder 2,
**dadurch gekennzeichnet,**
**dass** zum thermischen Fügen des Kolbenoberteils (2) mit dem Kolbenunterteil (3) das Kolbenoberteil (2) und/oder das Kolbenunterteil (3) mit einem Laser oder einer Induktionsheizung erhitzt werden.

4. Verwendung einer Vorrichtung (1), mit zwei koaxial zueinander angeordneten und unabhängig voneinander antreibbaren Arbeitsspindeln (4, 5), wovon die eine das Kolbenoberteil (2) und die andere das Kolbenunterteil (3) trägt, **dadurch gekennzeichnet,**
- **dass** die Vorrichtung zwei unabhängig voneinander betätigbare Werkzeugschlitten (6, 7) aufweist, wovon der eine Werkzeugschlitten (6) Werkzeug (8) zur Bearbeitung des Kolbenoberteils (2) und der andere Werkzeugschlitten (7) Werkzeug (9) zur Bearbeitung des Kolbenunterteils (3) trägt,
- **dass** die Vorrichtung (1) so ausgebildet ist, dass die beiden Kolbenteile (2, 3) unabhängig voneinander bearbeitet, zueinander ausgerichtet und miteinander gefügt werden können, ohne zwischenzeitlich ausgespannt werden zu müssen,
- **dass** die Vorrichtung (1) zur Durchführung des Verfahrens nach einem der vorhergehenden Ansprüche und zum Bearbeiten und Fügen eines aus einem Kolbenoberteil (2) und einem Kolbenunterteil (3) bestehenden Kolbens einer Brennkraftmaschine verwendet wird.

5. Verwendung nach Anspruch 4,
**dadurch gekennzeichnet,**
**dass** die Vorrichtung (1) zumindest eine Fügeeinrichtung (10, 10') aufweist, welche zum Fügen der beiden Kolbenteile (2, 3), insbesondere zum Verschrauben, Verkleben, Verlöten, Verschweißen und/oder zum thermischen Fügen verwendet wird.

6. Verwendung nach Anspruch 4 oder 5, **dadurch gekennzeichnet,**
**dass** die Fügeeinrichtung (10, 10') einen Laser oder eine Induktionsheizung aufweist, welche zum Fügen der beiden Kolben teile
verwendet wird.

7. Verwendung nach einem der Ansprüche 4 bis 6,
**dadurch gekennzeichnet,**
**dass** ein Verschrauben der beiden Kolbenteile (2, 3), insbesondere ein thermisches Verschrauben durch ein Verdrehen zumindest einer Arbeitsspindel (4, 5) bei gleichzeitigem Vortrieb derselben erfolgt.

8. Verwendung nach einem der Ansprüche 4 bis 7,
**dadurch gekennzeichnet,**
**dass** zumindest eine Arbeitsspindel (4, 5) zum Verschrauben der beiden Kolbenteile (2, 3) mit einem vordefinierten Drehmoment beaufschlagbar ist.

9. Verwendung nach einem der Ansprüche 4 bis 8,
**dadurch gekennzeichnet,**
**dass** die Vorrichtung (1) eine Reinigungseinrichtung aufweist, welche zur Reinigung einer Fügestelle vor dem Fügevorgang verwendet wird.

## Claims

1. A method for machining and assembling a piston of an internal combustion engine consisting of a piston upper part (2) and a piston lower part (3), with a device (1), with two work spindles (4, 5) arranged coaxially to one another and able to be driven independently of one another, one of which carries the piston upper part (2) and the other of which carries the piston lower part (3),
**characterized in that**
- the device (1) has two tool carriages (6, 7) which are able to be actuated independently of one another, of which one tool carriage (6) carries tool (8) for machining the piston upper part (2) and the other tool carriage (7) carries tool (9) for machining the piston lower part (3),
wherein
- the two piston parts (2, 3) are clamped independently of one another on two work spindles (4, 5) arranged coaxially to one another, and are machined,
- the two piston parts (2, 3) are aligned with respect to one another on the two work spindles (4, 5),
- a joint location between the piston upper part (2) and the piston lower part (3) can be cleaned,
- the two piston parts (2, 3) are joined to one another without having to be unclamped in the interim.

2. The method according to Claim 1,
**characterized in that**
the two piston parts (2, 3) are screwed, adhered, soldered, welded and/or thermally joined to one another.

3. The method according to Claim 1 or 2,
**characterized in that**
for the thermal joining of the piston upper part (2) to the piston lower part (3), the piston upper part (2) and/or the piston lower part (3) are heated with a laser or with an induction heating.

4. A use of a device (1), with two work spindles (4, 5) arranged coaxially to one another and able to be driven independently of one another, one of which carries the piston upper part (2) and the other of which carries the piston lower part (3), **characterized in that**
- the device has two tool carriages (6, 7) which are able to be actuated independently of one another, of which one tool carriage (6) carries tool (8) for machining the piston upper part (2) and the other tool carriage (7) carries tool (9) for machining the piston lower part (3),
- the device (1) is constructed such that the two piston parts (2, 3) can be machined independently of one another, aligned with respect to one another and joined to one another, without having to be unclamped in the interim,
- the device (1) is used for carrying out the method according to one of the preceding claims and for machining and assembling a piston of an internal combustion engine consisting of a piston upper part (2) and a piston lower part (3).

5. The use according to Claim 4,
**characterized in that**
the device (1) has at least one assembling device (10, 10'), which is used for assembling the two piston parts (2, 3), in particular for screwing, adhering, soldering, welding and/or thermally joining.

6. The use according to Claim 4 or 5,
**characterized in that**
the assembling device (10, 10') has a laser or an induction heating, which is used for assembling the two piston parts.

7. The use according to one of Claims 4 to 6, **characterized in that**
a screwing of the two piston parts (2, 3), in particular a thermal screwing takes place by a twisting of at least one work spindle (4, 5) with simultaneous advancing thereof.

8. The use according to one of Claims 4 to 7, **characterized in that**
at least one work spindle (4, 5) for screwing the two piston parts (2, 3) is able to be acted upon by a predefined torque.

9. The use according to one of Claims 4 to 8, **characterized in that**
the device (1) has a cleaning device which is used for cleaning a joint location before the assembling process.

## Revendications

1. Procédé d'usinage et d'assemblage d'un piston constitué d'une partie supérieure de piston (2) et d'une partie inférieure de piston (3) d'un moteur à combustion interne comportant un dispositif (1), avec deux broches de travail (4, 5) disposées coaxialement l'une à l'autre et peuvent être entraînées indépendamment l'une de l'autre, desquelles l'une porte la partie supérieure de piston (2) et l'autre porte la partie inférieure de piston (3),
**caractérisé en ce que**
- le dispositif (1) présente deux fentes d'outil (6, 7) actionnables indépendamment l'une de l'autre, desquelles l'une des fentes d'outil (6) porte un outil (8) d'usinage de la partie supérieure de piston (2) et l'autre fente d'outil (7) porte l'outil (9) d'usinage de la partie inférieure de piston (3),
dans lequel
- les deux parties de piston (2, 3) sont encastrées et usinées indépendamment l'une de l'autre sur deux broches de travail (4, 5) disposées coaxialement l'une à l'autre,
- les deux parties de piston (2, 3) sont alignées l'une par rapport à l'autre sur les deux broches de travail (4, 5),
- un emplacement d'assemblage entre la partie supérieure de piston (2) et la partie inférieure de piston (3) peut être nettoyé,
- les deux parties de piston (2, 3) sont assemblées l'une à l'autre, sans qu'il soit obligatoire de les désencastrer entretemps.

2. Procédé selon la revendication 1,
**caractérisé en ce que**
les deux parties de piston (2, 3) sont vissées, collées, brasées, soudées et/ou assemblées thermiquement l'une à l'autre.

3. Procédé selon les revendications 1 ou 2,
**caractérisé en ce que**
en vue de l'assemblage thermique de la partie supérieure de piston (2) avec la partie inférieure de piston (3), la partie supérieure de piston (2) et/ou la partie inférieure de piston (3) sont chauffées avec un laser ou un chauffage par induction.

4. Utilisation d'un dispositif (1), comportant deux broches de travail (4, 5) disposées coaxialement l'une à l'autre et pouvant être entraînées indépendamment l'une de l'autre, desquelles une porte la partie supérieure de piston (2) et l'autre porte la partie inférieure de piston (3), **caractérisée en ce que**
- le dispositif présente deux fentes d'outil (6, 7) actionnables indépendamment l'une de l'autre, desquelles l'une des fentes d'outil (6) porte un outil (8) d'usinage de la partie supérieure de piston (2) et l'autre fente d'outil (7) porte l'outil (9) d'usinage de la partie inférieure de piston (3),
- le dispositif (1) est réalisé de telle sorte que les deux parties de piston (2, 3) puissent être usinées indépendamment l'une de l'autre, alignées et assemblées l'une à l'autre, sans qu'il soit obligatoire de les désencastrer entretemps,
- le dispositif (1) est utilisé afin de mettre en oeuvre le procédé selon une des revendications précédentes et usiner et assembler un piston d'un moteur à combustion interne constitué d'une partie supérieure de piston (2) et d'une partie inférieure de piston (3).

5. Utilisation selon la revendication 4, **caractérisée en ce que**
le dispositif (1) présente au moins un dispositif d'assemblage (10, 10'), qui est utilisé pour assembler les deux parties de piston (2, 3), notamment par vissage, collage, brasage, soudage et/ou assemblage thermique.

6. Utilisation selon les revendications 4 ou 5, **caractérisée en ce que**
le dispositif d'assemblage (10, 10') présente un laser ou un chauffage par induction, qui est utilisé pour assembler les deux parties de piston.

7. Utilisation selon une des revendications 4 à 6, **caractérisée en ce que**
un vissage des deux parties de piston (2, 3), notamment un vissage thermique par une torsion d'au moins une broche de travail (4, 5) a lieu lors de la propulsion simultanée de celle-ci.

8. Utilisation selon une des revendications 4 à 7, **caractérisée en ce que**
au moins une broche de travail (4, 5) pour visser les deux parties de piston (2, 3) peut être sollicitée avec un couple de rotation prédéfini.

9. Utilisation selon une des revendications 4 à 8, **caractérisée en ce que**
le dispositif (1) présente un dispositif de nettoyage qui est utilisé pour nettoyer un emplacement d'assemblage avant le processus d'assemblage.
